# FASCICULE DE BREVET EUROPEEN

(11) **EP 0 576 665 B1**
(45) Date de publication et mention de la délivrance du brevet: **23.12.1998**
(21) Numéro de dépôt: 93904097.8
(22) Date de dépôt: 20.01.1993
(51) Int. Cl.: F25D 3/11, B65G 15/32, A23L 3/36

(54) **PROCEDE ET DISPOSITIF DE CONGELATION**
VERFAHREN UND VORRICHTUNG ZUM GEFRIEREN
FREEZING METHOD AND DEVICE

(30) Priorité: 21.01.1992 FR 9200582
(43) Date de publication de la demande: 05.01.1994
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: LERMUZEAUX, André Les Bruyères, F-94370 Sucy-en-Brie (FR)
(74) Mandataire: Vesin, Jacques
(86) Numéro de dépôt international: FR9300052
(87) Numéro de publication internationale: WO9314358

(56) Documents cités:
- DE-A- 2 808 837
- FR-A- 1 603 509
- GB-A- 1 241 061
- GB-A- 2 092 880
- US-A- 3 427 820
- US-A- 3 844 133
- US-A- 4 783 972
- US-A- 4 839 220

## Description

La présente invention concerne un procédé et un dispositif de congélation d'articles, notamment des aliments, sous forme solide, pâteuse ou liquide.

La congélation d'un article par immersion complète ou non dans un bain d'un liquide cryogénique tel l'azote liquide, est bien connue. Ainsi la demande de brevet GB 2.092.880 décrit un procédé de congélation d'articles liquides, par exemple du sang, ou pâteux par exemple du beurre, du yoghourt, du fromage blanc ou du chocolat, selon lequel on laisse tomber dans un bain d'azote liquide le produit à congeler et que l'on récupère sous forme de pellets solides.

Les articles introduits dans le bain de liquide cryogénique sont habituellement à la température ambiante ou en tout cas, à une température très supérieure à celle du liquide cryogénique.

De ce fait, un phénomène de caléfaction se produit. Ainsi ces articles, dès qu'ils entrent en contact avec le liquide cryogénique, le réchauffe au niveau du point de contact, ce qui conduit à son passage à l'état gazeux. Ce gaz forme une couche qui entoure l'article et constitue alors un frein au transfert thermique entre l'article et le liquide cryogénique. Ce phénomène entraîne un transfert de chaleur plus long entre l'article et le bain de liquide cryogénique et donc ralentit la congélation de l'article. De plus, le transfert thermique entre l'article et les liquides cryogéniques n'est pas assuré de façon homogène, ce qui peut entraîner une fragilité de l'article congelé.

Le brevet US n°4,783,972 décrit un réfrigérateur cryogénique comprenant un tunnel de congélation pourvu d'une entrée, d'une sortie et de moyens de convoyage des produits qui y sont congelés. Les produits sont mis en contact avec un liquide cryogénique dans une partie située généralement à proximité de l'entrée et un ventilateur monté plus à proximité de l'entrée que de la sortie commande le flux de vapeur cryogénique. Le contact des produits avec l'azote liquide cryogénique s'effectue préférentiellement dans un réservoir, ce qui permet de ralentir la vaporisation de l'azote liquide.

La demande de brevet DE-A-28 08 837 a trait à un dispositif de refroidissement et/ou de congélation constitué d'un 'élément' ou 'table' de congélation à l'intérieur duquel est enfermé un fluide cryogénique. La congélation est effectuée par contact entre ledit élément de congélation et l'aliment à congeler par transfert de chaleur à travers la paroi dudit élément de congélation. L'aliment à congeler est déplacé au moyen d'une bande de convoyage.

Le brevet FR-A-1 603 509 montre un tunnel cryogénique où les articles à traiter sont congelés par l'action combinée d'une pluralité de buses d'aspersion placées au-dessus des articles et d'un dispositif de projection du liquide cryogénique par le dessous du support sur lequel se trouvent les articles.

La demande de brevet WO 90/06693 décrit un procédé de congélation d'une surface d'un article selon lequel on dispose ledit article sur la surface refroidie d'un plateau métallique, animé d'un mouvement vibratoire. La surface du plateau est refroidie par passage sous le plateau d'un liquide cryogénique. Avec ce type de procédé, l'article à congeler n'est pas en contact direct avec le liquide cryogénique, et ne souffre donc pas des inconvénients mentionnés ci-dessus. Cependant, il a pu être constaté que ce type de procédé pouvait entraîner lui aussi des inconvénients notamment lors du traitement de produits pâteux, tels des boulettes de purée de légumes, ou liquides. Ainsi, ces articles adhèrent à la surface du plateau jusqu'à ce que leur surface ait pu être suffisamment refroidie, ce qui induit un temps de latence, retardant le traitement des articles en amont de la ligne de production. Ce temps de latence entraîne donc une baisse parfois importante de la productivité.

Un premier objet de la présente invention consiste alors en un procédé pour la congélation totale ou partielle d'articles mettant en oeuvre un liquide cryogénique, obviant aux inconvénients des procédés connus.

En particulier, le procédé de l'invention permet d'éviter le phénomène de caléfaction et la formation d'une couche de gaz autour de l'article, de même que tout phénomène d'adhérence entre l'article traité et le support sur lequel il est disposé, et celà que ledit article soit solide, pâteux ou liquide. De plus, le procédé de l'invention autorise un transfert thermique homogène entre l'article et le liquide cryogénique.

Un autre objet de l'invention consiste en un dispositif de congélation d'articles permettant la mise en oeuvre du procédé ci-dessus.

La présente invention concerne donc un procédé pour congeler totalement ou partiellement un article, tel que défini en revendication 1.

D'autres objets et caractéristiques de l'invention sont detaillés dans la description ci-dessous ainsi que dans les figures.

La figure 1 représente un dispositif selon l'invention où les moyens d'imprégnation en liquide cryogénique sont constitués de buses de pulvérisation en série.

La figure 2 représente un dispositif selon lequel l'imprégnation du support poreux est réalisé par ruissellement de liquide cryogénique.

Selon la présente invention ledit support poreux peut être fixe, mais plus généralement il est mobile de sorte à permettre le déplacement des articles que l'on dépose à sa surface.

Habituellement, le support poreux se présente alors sous la forme d'une bande convoyeuse ou convoyeur, mise en mouvement en continu de manière classique.

Le matériau dont est constitué le support poreux est de préférence flexible et présente une inertie thermique faible de sorte que son équilibre thermique avec le liquide cryogénique soit rapidement atteint sans consommation prohibitive dudit liquide cryogénique. Le support poreux peut être alors un treillis à maille fine, métallique ou en matériau composite, tel par exemple un réseau de fibres recouvertes de teflon.

Mais le plus généralement, le support poreux est constitué d'un tissu en polymère synthétique ou naturel, tissé ou non tissé comme par exemple un feutre non tissé constitué d'un enchevêtrement de fibres. Pour certaines applications, notamment pour la congélation d'aliments, où un nettoyage soigneux et aisé est requis, le tissu est en un polymère synthétique, tel un polyamide comme le nylon, ou de préférence un polyester comme ceux connus sous les marques Tergal, Dacron ou Térylène. Avantageusement, le tissu est constitué de monofilaments, dont la taille peut être inférieure à 1 mm, par exemple de l'ordre de 0,1 à 1 mm.

La taille des pores du support poreux est telle que le liquide cryogénique y soit retenu, essentiellement par capillarité ou tension de surface. Autrement dit, le support poreux doit être à même de retenir le liquide cryogénique par capillarité ou tension de surface.

Ces pores présentent habituellement un diamètre compris entre 0,001 et 5 mm, de préférence compris entre 0,01 et 2 mm.

Le liquide cryogénique selon l'invention est un gaz liquéfié, de préférence, l'azote liquide.

Le support poreux peut être imprégné à saturation en liquide cryogénique. Pour ce faire, on imprègne généralement le support de sorte que le liquide cryogénique déborde légèrement, par exemple de 1 à 2 mm, au-dessus de la surface du support poreux.

Bien entendu, il est également possible de n'imprégner que partiellement le support poreux, de sorte qu'il ne contienne que, par exemple, 50 à 80 % en poids de la quantité de liquide cryogénique qu'il peut absorber pour en être saturé.

La teneur en liquide cryogénique imprégnant le support poreux est en fait principalement choisie en fonction de la quantité de chaleur que l'on veut transférer à l'article et de l'épaisseur de celui-ci.

Ainsi, si l'article présente une épaisseur supérieure à environ 10 mm et qu'on souhaite ne congeler que sa face en contact direct avec le support poreux, par exemple en vue de faciliter sa manutention ultérieure, on peut ne pas saturer le support poreux en liquide cryogénique. Par contre, si l'on souhaite congeler complètement un article de taille plus petite, on sature le support poreux en liquide cryogénique.

Selon la quantité de chaleur à transférer et l'épaisseur de l'article, le support poreux contient généralement plus de 0,2 kg de liquide cryogénique par kg de support poreux, de préférence de 0,2 à 1 kg/kg, plus préférentiellement de 0,2 à 0,5 kg/kg.

L'imprégnation du support poreux en liquide cryogénique peut se faire par tout moyen , par exemple par immersion du support poreux dans un bain de liquide cryogénique, par pulvérisation, sous pression ou non, du liquide cryogénique sur le support poreux, par poussée au moyen d'une pompe d'un flux de liquide cryogénique traversant le support poreux de bas en haut, ou ruissellement de fluide cryogénique sur le support poreux.

Les articles pouvant être congelés selon le procédé de l'invention peuvent être de nature diverse et se présenter sous forme solide, pâteuse ou liquide.

Le procédé de l'invention convient tout particulièrement à la congélation de produits alimentaires solides ou pâteux telles par exemple des boulettes de purée de légumes, des tranches de viande ou de poisson. Les articles à congeler peuvent être individualisés les uns par rapport aux autres, ou se présenter sous la forme d'une bande continue de longueur variable, par exemple une bande de purée de légumes ou de crème glacée, destinée à être tranchée ultérieurement. Le procédé selon l'invention permet notamment de croûter la face de l'article en contact direct avec le support poreux. Par le terme "croûter", on entend ici la congélation d'au moins une des faces de l'article en vue de faciliter sa manutention ultérieure.

Outre le croûtage de la face de l'article au contact du support poreux, on peut, simultanément ou non, croûter facilement au moins l'une des autres faces de l'article, par exemple en pulvérisant ou en faisant ruisseler du liquide cryogénique sur l'article. Cette pulvérisation ou ce ruissellement est avantageusement celui que l'on utilise également en vue de l'imprégnation en liquide cryogénique du support poreux.

Les articles à congeler sont déposés sur le support poreux refroidi à une température voisine de celle du liquide cryogénique. A ce stade, le support poreux est déjà imprégné de liquide cryogénique.

Dès que le support poreux est imprégné de liquide cryogénique, ce dernier se vaporise régulièrement et empêche tout collage de l'article au support poreux. De plus, même lorsque l'article est liquide, tel l'eau, il ne mouille pas le support poreux imprégné de liquide cryogénique. Le transfert thermique entre le support poreux imprégné de liquide cryogénique et l'article s'éffectue parfaitement sans que ne se produise le phénomène de caléfaction, malgré la vaporisation du liquide cryogénique.

L'invention concerne également un dispositif de congélation d'articles, tel que défini en revendication 18, ainsi que l'utilisation d'un support poreux selon la revendication 24.

Le convoyeur 1 peut être avantageusement un convoyeur à rouleaux, entraîné de manière classique par un moteur.

La longueur du convoyeur dépend de la quantité de chaleur que l'on veut transférer à l'article. Mais généralement, elle est comprise entre 1 et 15 m.

La largeur et l'épaisseur du convoyeur 1 ne sont pas critiques. Elles sont principalement choisies en fonction des dimensions et du nombre d'articles que l'on veut congeler par unité de temps.

Généralement, l'épaisseur du convoyeur 1 est comprise entre 1 et 20 mm, de préférence entre 1 et 10 mm. La surface du convoyeur 1 mise en contact avec les articles à congeler est généralement horizontale, mais elle peut également présenter une pente descendante ou ascendante, ou une succession de pentes alternativement descendantes ou ascendantes. La surface du convoyeur 1 peut même être verticale ou quasi verticale dans la mesure où le contact entre la surface du convoyeur et les articles est assuré par des moyens adéquats.

Le convoyeur 1, en particulier quand les articles à congeler sont relativement lourds et pourraient entraver le bon défilement du convoyeur 1, peut être soutenu sur toute ou partie de sa longueur sur laquelle sont convoyés les articles, au moyen d'un plateau de soutien 4 rigide, de préférence en métal tels l'aluminium ou l'inox.

Le plateau de soutien 4, à la surface duquel court le convoyeur, peut être plein et/ou grillagé. Le dispositif selon l'invention peut également comporter des moyens de récupération du liquide cryogénique en excès qui s'écoule à travers les pores du convoyeur 1. Ces moyens de récupération comportent une auge 5 habituellement disposée sous le convoyeur, de préférence au niveau où le convoyeur 1 est imprégné de liquide cryogénique.

Lorsque le convoyeur 1 est supporté par un plateau de soutien 4, ce dernier est grillagé ou ajouré, au moins sur la partie située au-dessus de l'auge 5, de sorte à permettre le passage du liquide cryogénique vers ladite auge 5. Cette dernière peut alors être située soit au-dessus de cette partie grillagée du plateau de soutien 4 ou soit au-dessous de la bande de retour 6 du convoyeur 1, elle-même située sous le plateau de soutien 4 de sorte que le liquide cryogénique s'écoulant au travers du convoyeur 1, traverse le plateau de soutien 4 puis la bande de retour 6 du convoyeur 1 et enfin est recueilli dans l'auge 5.

Selon un autre mode de réalisation, le plateau de soutien 4 forme lui-même une auge de récupération du liquide cryogénique. Il peut alors être légèrement incurvé. Outre l'auge 5, lesdits moyens de récupération comportent également un appareillage permettant de renvoyer le liquide cryogénique en excès vers les moyens d'imprégnation 3 en liquide cryogénique. Cet appareillage comporte habituellement une pompe 7. Les moyens d'imprégnation 3 sont également alimentés en liquide cryogénique par un réservoir auquel ils sont reliés.

Ces moyens d'imprégnation peuvent notamment consister en des buses de pulvérisation, un bac d'immersion rempli de liquide cryogénique et traversé par le convoyeur, une gouttière d'où ruisselle le liquide cryogénique ou par une pompe poussant du liquide cryogénique sous le convoyeur qu'il traverse du bas vers le haut.

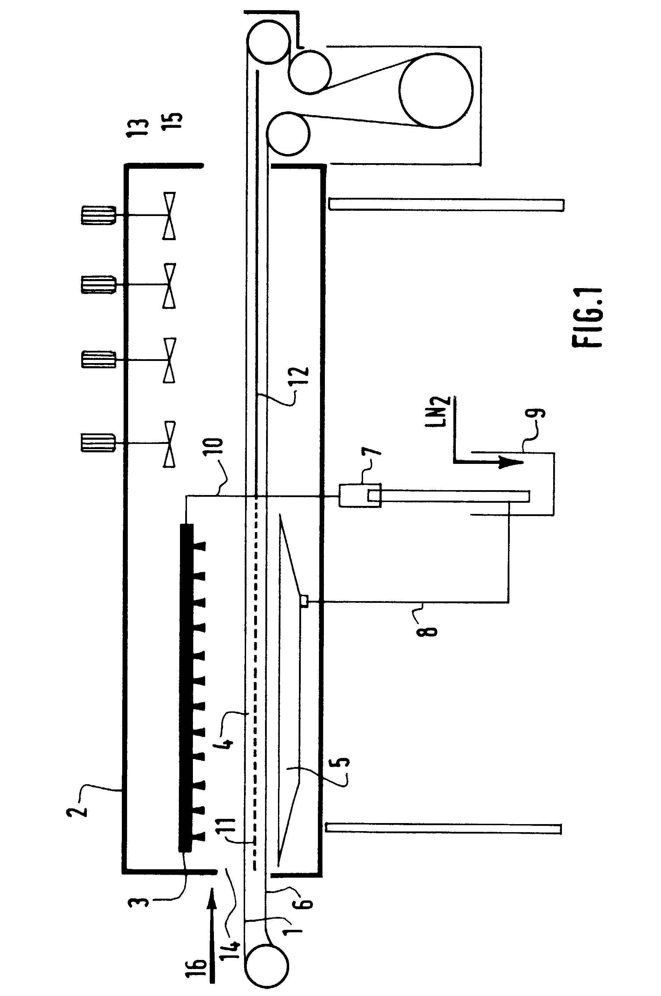

La figure 1 représente un dispositif selon l'invention où le convoyeur 1, constitué d'un matériau poreux, est entraîné par un système de roulement.

Le convoyeur 1 est isolé sur toute sa longueur par une enceinte 2 hermétique ne comportant que deux ouvertures, permettant l'entrée 14 et la sortie 15 des articles.

Les moyens d'imprégnation 3 en liquide cryogénique sont ici constitués de buses de pulvérisation en série, disposées au-dessus du convoyeur 1.

La partie du convoyeur 1 portant les articles est horizontale et soutenue par un plateau de soutien 4 dont la portion située au niveau des buses de pulvérisation est grillagée (11), l'autre portion du plateau étant pleine (12).

Sous la portion grillagée 11 du plateau de soutien 4 est disposée une auge 5 de telle sorte que la bande de retour 6 du convoyeur puisse défiler entre ledit plateau de soutien 4 et ladite auge 5. L'auge 5 est reliée par une conduite 8 à un réservoir de stockage 9 dans lequel vient se déverser l'excès de liquide cryogénique. Le récipient de stockage 9 est également relié à un réservoir de liquide cryogénique (non représenté) et équipé d'une pompe 7, qui, par l'intermédiaire d'une conduite 10, alimente les buses de pulvérisation 3 disposés en série, en liquide cryogénique.

La température de l'atmosphère régnant dans l'enceinte est homogénéisée au moyen de ventilateurs 13.

En vue de la congélation d'articles à l'aide du dispositif de la figure 1, on procède dans un premier temps au refroidissement du convoyeur 1 mis en mouvement. Ce refroidissement est assuré par la pulvérisation de liquide cryogénique par les buses 3. Puis on dispose manuellement ou automatiquement, les articles à congeler sur le convoyeur 1, au niveau de l'entrée de l'enceinte. Les articles sont déplacés dans le sens de la flèche 16. Le convoyeur 1 est alors à nouveau imprégné de liquide cryogénique au moyen des buses 3.

Selon le présent dispositif, les buses 3 sont disposées de telle sorte que le liquide cryogénique soit dispersé sur toute la largeur du convoyeur 1. Ainsi, les articles passant sous les buses, sont croûtés au niveau de leur face inférieure par contact avec le convoyeur 1 imprégné de liquide cryogénique, mais également sur leurs autres faces, par le liquide cryogénique pulvérisé. Si l'on souhaite ne croûter que la face des articles au contact du convoyeur 1, on peut disposer les buses 3 de pulvérisation de telle sorte que le liquide cryogénique imprègne le convoyeur 1 sans toucher préalablement les articles.

Pour ce faire, les buses 3 peuvent par exemple être disposées au-dessus d'un ou des deux bords latéraux du convoyeur 1, alors qu'on fait défiler les articles dans sa partie centrale. Le convoyeur 1 peut toutefois être imprégné en liquide cryogénique sur toute sa largeur, par capillarité. Le liquide cryogénique en excès traverse le convoyeur 1, puis la portion grillagée 11 du plateau de soutien 4 et imprègne la bande de retour 6 du convoyeur 1, de sorte que les articles déposés sur ledit convoyeur 1, au niveau de l'entrée 14 de l'enceinte 2, sont immédiatement mis en contact avec un support poreux imprégné de liquide cryogénique.

Le cas échéant, l'excès de liquide cryogénique traversant ladite bande retour 6 est récupéré dans l'auge 5. Ce liquide cryogénique passe alors dans le récipient de stockage 9 puis il est renvoyé vers les buses de pulvérisation 3 au moyen de la pompe 7 en même temps que le liquide cryogénique complémentaire provenant du réservoir, qui permet de compenser les pertes en liquide cryogénique vaporisé. Les articles crôutés ou congelés sont récupérés à la sortie 15 de l'enceinte 2 sans difficulté dans la mesure où ils n'adhérent aucunement au convoyeur 1.

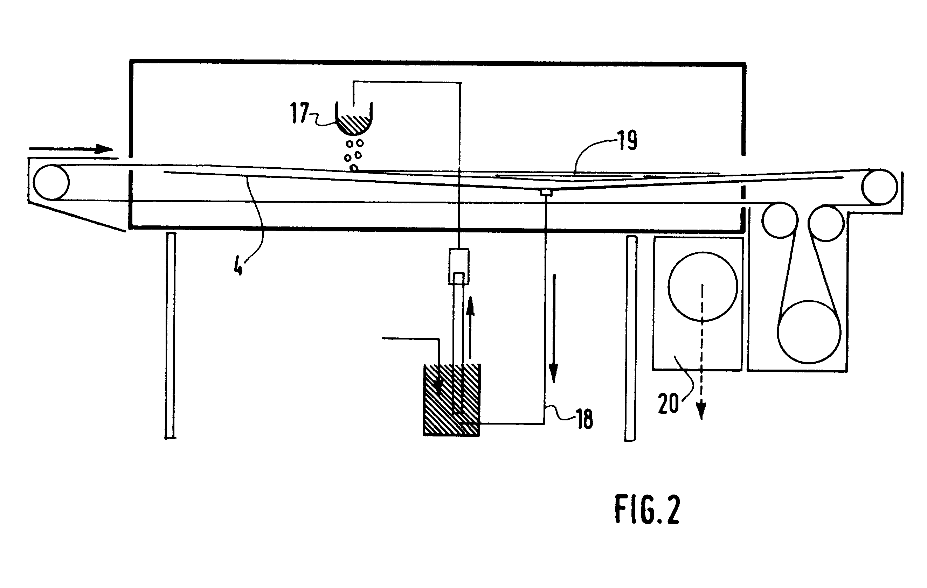

La figure 2 représente une variante du dispositif de l'invention où le moyen d'imprégnation en liquide cryogénique est constitué d'une gouttière 17 d'où s'écoule, par ruissellement, un flux de liquide cryogénique.

Le convoyeur 1 présente deux parties, l'une de pente descendante et l'autre de pente ascendante, de sorte qu'il est légèrement incurvé dans sa partie centrale.

Le plateau de soutien 4 est plein et incurvé lui aussi de sorte à suivre le chemin parcouru par le convoyeur 1. Il constitue lui-même l'auge de récupération de l'excès de liquide cryogénique et est relié par une conduite 17 au récipient de stockage 9. Du fait que le convoyeur est légèrement incurvé, il forme dans sa partie centrale un bain de liquide cryogénique de faible hauteur, par exemple 1 à 2 mm, traversé par les articles. Le dispositif comporte également un système de ventilation 20 permettant d'évacuer de l'enceinte 2 le liquide cryogénique vaporisé.

Le liquide cryogénique ruisselant de la gouttière 17, tombe sur les articles défilant sur le convoyeur 1, mais ne suffit pas à les croûter. Ainsi, le dispositif de la figure 2 est, plus particulièrement destiné à ne croûter que la face des articles au contact du convoyeur 1 et éventuellement, la partie inférieure des articles au contact du bain de liquide cryogénique 19.

Les exemples ci-dessous illustrent la présente invention.

### Exemple 1

En vue de croûter des bûches glacées extrudées en continu, on utilise le dispositif représenté à la figure 1.

Le convoyeur 1 est une toile tissée en monofilament de polyester dont le poids est de 0,99 kg/m². Les pores de la toile ont un diamètre moyen de 0,37 mm. Cette toile est refroidie de 20 °C à -196°C environ en pulvérisant 0,72 kg d'azote liquide/kg de toile soit 0,88 1 d'azote liquide/m² de toile.

Le poids d'azote liquide retenu par capillarité dans la toile saturée est de 0,3 kg/m².

La toile fait 0,40 m de large. Les articles parcourent un chemin de 4 m de long au contact de la toile.

Les bûches glacées mesurent 100 mm de long, ont une épaisseur de 80 mm et pèsent 750 g.

Lorsqu'elles entrent dans l'enceinte 2, leur température est de -5°C. Une fois, croûtées leur température est de -6°C.

Les bûches sont disposées sur le convoyeur 1 les unes derrière les autres.

L'azote liquide est pulvérisé par les buses 3 sous une pression de 1,5 bar. On peut ainsi croûter 25 bûches par minute avec une consommation d'azote liquide de 0,3 l/kg de bûches.

### Exemple 2

Au moyen du même dispositif que celui de l'exemple 1, on a croûté des quenelles de 60 g (longueur de 10 cm et diamètre de 20 mm). A l'entrée de l'enceinte, les quenelles sont à 15°C et elles en sortent croûtées à une température de -3°C,

On peut ainsi traiter 3 tonnes/heure de ces quenelles avec une consommation en azote liquide de 0,64 l/kg.

### Exemple 3

On utilise le dispositif de la figure 1 mais avec un convoyeur 1 constitué d'une toile en monofilament de polyester dont les caractéristiques sont les suivantes :

| | |
|---|---|
| Poids de la toile au m² | 0,590 kg |
| Diamètre des pores | 0,12mm |
| Azote liquide pulvérisé pour refroidir la toile de + 20° à -196°C | 0,71 kg/kg, soit 0,5 l/m² de toile |
| Poids d'azote retenu par capillarité dans la toile | 0,25 kg/m² |

Les autres caractéristiques du dispositif sont les mêmes que celles du dispositif des exemples 1 et 2.

Avec ce dispositif, on croûte sur leurs deux faces des tranches de viande de 104 mm de diamètre et de 12 mm d'épaisseur pour un poids de 100 g.

Deux tranches de viande sont disposées de front sur une largeur d'au plus 380 mm et une longueur de 140 mm pour quatre tranches. A l'entrée de l'enceinte (2), la température des tranches de viande est de -1°C. A la sortie de l'enceinte, leur température est de -2°C.

On peut ainsi traiter 800 kg de viande pour une consommation en azote liquide de 0,5 l/kg.

## Revendications

1. Procédé pour congeler totalement ou partiellement un article, comprenant la mise en oeuvre des mesures suivantes :
a) on imprègne d'un liquide cryogénique un support poreux dont la taille des pores est telle que le liquide cryogénique y soit retenu ;
b) puis on met en contact l'article avec la surface du support poreux ainsi imprégné de façon à assurer la congélation partielle ou totale de l'article par transfert thermique entre ledit article et ledit liquide cryogénique retenu dans ledit support poreux; et
c) on récupère l'article ainsi congelé totalement ou partiellement.

2. Procédé selon la revendication 1, caractérisé en ce que le support poreux retient le liquide cryogénique par capillarité ou tension de surface.

3. Procédé selon la revendication 1 ou 2, caractérisé en ce que le support poreux est imprégné à saturation.

4. Procédé selon la revendication 1 ou 2, caractérisé en ce que le support poreux est imprégné partiellement.

5. Procédé selon la revendication 4, caractérisé en ce que le support poreux ne contient que 50 à 80% en poids de la quantité de liquide cryogénique qu'il peut absorber pour en être saturé.

6. Procédé selon l'une des revendications 1 à 5, caractérisé en ce que le support poreux est mobile.

7. Procédé selon la revendication 6, caractérisé en ce que le support poreux est un convoyeur.

8. Procédé selon l'une des revendications précédentes, caractérisé en ce que le support poreux est un treillis à mailles fines en un matériau métallique ou en un matériau composite.

9. Procédé selon l'une des revendications 1 à 7, caractérisé en ce que le support poreux est constitué d'un tissu en polymère synthétique ou naturel, tissé ou non-tissé.

10. Procédé selon la revendication 9, caractérisé en ce que ledit polymère synthétique est un polyester.

11. Procédé selon l'une des revendications 9 ou 10, caractérisé en ce que le tissu en polymère synthétique est constitué de monofilaments.

12. Procédé selon l'une des revendications précédentes, caractérisé en ce que les pores du support poreux ont un diamètre compris entre 0,001 et 5mm, de préférence entre 0,01 et 2mm.

13. Procédé selon l'une des revendications précédentes, caractérisé en ce que le liquide cryogénique est l'azote liquide.

14. Procédé selon l'une des revendications précédentes, caractérisé en ce que l'on réalise l'imprégnation du support en liquide cryogénique par pulvérisation ou ruissellement de liquide cryogénique, par poussée au moyen d'une pompe d'un flux de liquide cryogénique ou par passage au travers d'un bain de liquide cryogénique.

15. Procédé selon l'une des revendications précédentes, caractérisé en ce que l'article est croûté sur sa face au contact direct du support poreux.

16. Procédé selon la revendication 15, caractérisé en ce que l'article est croûté sur au moins une autre de ses faces par pulvérisation ou ruissellement de liquide cryogénique.

17. Procédé selon l'une des revendications précédentes, caractérisé en ce que l'article est un aliment liquide, ou de préférence pâteux ou solide.

18. Dispositif pour la congélation d'articles, comportant un convoyeur (1) poreux, isolé par une enceinte (2), ainsi que des moyens d'imprégnation (3) en liquide cryogénique dudit convoyeur (1), la taille des pores du convoyeur étant telle que du liquide cryogénique puisse y être retenu, des moyens permettant de disposer des articles à congeler sur le support poreux imprégné de liquide cryogénique de manière à assurer la congélation totale ou partielle de l'article par transfert thermique entre ledit article et ledit liquide cryogénique retenu dans ledit support poreux.

19. Dispositif selon la revendication 18, caractérisé en ce que les pores ont un diamètre compris entre 0,001 et 5mm, de préférence compris entre 0,01 et 2mm.

20. Dispositif selon la revendication 18 ou 19, caractérisé en ce que ledit convoyeur est constitué en un matériau poreux qui est un tissu en polymère synthétique ou naturel, tissé ou non tissé, de préférence en polyester.

21. Dispositif selon l'une des revendications 18 à 20, caractérisé en ce que le convoyeur (1) est soutenu sur tout ou partie de la longueur sur laquelle sont déposées les articles, par un plateau de soutien (4), plein et/ou grillagé.

22. Dispositif selon l'une des revendications 18 à 21, caractérisé en ce que ledit dispositif comporte en outre des moyens de récupération et de recyclage du liquide cryogénique en excès, consistant essentiellement en une auge (5) et une pompe (7) reliée aux moyens d'imprégnation (8).

23. Dispositif selon la revendication 21, caractérisé en ce que le plateau de soutien (4) forme également une auge.

24. Utilisation d'un support poreux constitué d'un tissu en polymère synthétique ou naturel, tissé ou non tissé, imprégné d'un liquide cryogénique, pour congeler un article.

25. Utilisation selon la revendication 24, caractérisée en ce que le polymère synthétique est un polyester.

26. Utilisation selon la revendication 24 ou 25, caractérisée en ce que le tissu en polymère synthétique est constitué de monofilaments.

27. Utilisation selon la revendication 24 ou 25, caractérisée en ce que le support poreux présente des pores dont le diamètre est compris entre 0,001 et 5mm, de préférence entre 0,01 et 2mm.

28. Utilisation selon l'une des revendications 24 à 27, caractérisée en ce que le liquide cryogénique est de l'azote liquide.

## Patentansprüche

1. Verfahren zum vollständigen oder teilweisen Gefrieren eines Artikels, das die Anwendung folgender Maßnahmen umfaßt:
a) Es wird mit einer kryogenen Flüssigkeit ein poröser Träger imprägniert, dessen Porenabmessungen derart sind, daß die kryogene Flüssigkeit in diesem zurückgehalten wird;
b) dann wird der Artikel mit der Oberfläche des so imprägnierten porösen Trägers so in Kontakt gebracht, daß das teilweise oder vollständige Gefrieren des Artikels durch Wärmeübertragung zwischen dem Artikel und der kryogenen Flüssigkeit, die in dem porösen Träger zurückgehalten wird, gewährleistet ist; und
c) der auf diese Weise vollständig oder teilweise gefrorene Artikel wird wieder geborgen.

2. Verfahren nach Anspruch 1, dadurch gekennzeichnet, daß der poröse Träger die kryogene Flüssigkeit durch Kapillarwirkung oder Oberflächenspannung zurückhält.

3. Verfahren nach Anspruch 1 oder 2, dadurch gekennzeichnet, daß der poröse Träger bis zur Sättigung imprägniert wird.

4. Verfahren nach Anspruch 1 oder 2, dadurch gekennzeichnet, daß der poröse Träger teilweise imprägniert ist.

5. Verfahren nach Anspruch 4, dadurch gekennzeichnet, daß der poröse Träger nur 50 bis 80 Gewichts-% der Menge kryogener Flüssigkeit enthält, die er bis zur Sättigung absorbieren kann.

6. Verfahren nach einem der Ansprüche 1 bis 5, dadurch gekennzeichnet, daß der poröse Träger beweglich ist.

7. Verfahren nach Anspruch 6, dadurch gekennzeichnet, daß der poröse Träger ein Fördermittel ist.

8. Verfahren nach einem der vorangehenden Ansprüche, dadurch gekennzeichnet, daß der poröse Träger ein feinmaschiges Netzwerk aus einem metallischen Material oder einem Verbundmaterial ist.

9. Verfahren nach einem der Ansprüche 1 bis 7, dadurch gekennzeichnet, daß der poröse Träger aus einem gewebten oder nichtgewebten textilen Stoff aus einem synthetischen oder natürlichen Polymer gebildet wird.

10. Verfahren nach Anspruch 9, dadurch gekennzeichnet, daß das synthetische Polymer ein Polyester ist.

11. Verfahren nach einem der Ansprüche 9 oder 10, dadurch gekennzeichnet, daß der textile Stoff aus synthetischem Polymer aus Monofilamenten gebildet wird.

12. Verfahren nach einem der vorangehenden Ansprüche, dadurch gekennzeichnet, daß die Poren des porösen Trägers einen Durchmesser im Bereich zwischen 0,001 und 5mm und bevorzugt zwischen 0,01 und 2mm aufweisen.

13. Verfahren nach einem der vorangehenden Ansprüche, dadurch gekennzeichnet, daß die kryogene Flüssigkeit flüssiger Stickstoff ist.

14. Verfahren nach einem der vorangehenden Ansprüche, dadurch gekennzeichnet, daß die Imprägnierung des Trägers mit kryogener Flüssigkeit durch Versprühen oder Verrieseln der kryogenen Flüssigkeit, durch Schub eines Stroms kryogener Flüssigkeit mittels einer Pumpe oder durch Passieren eines Bades mit kryogener Flüssigkeit durchgeführt wird.

15. Verfahren nach einem der vorangehenden Ansprüche, dadurch gekennzeichnet, daß der Artikel auf seiner in direktem Kontakt mit dem porösen Träger befindlichen Fläche verkrustet wird.

16. Verfahren nach Anspruch 15, dadurch gekennzeichnet, daß der Artikel auf wenigstens einer anderen seiner Flächen durch Versprühen oder Verrieseln der kryogenen Flüssigkeit verkrustet wird.

17. Verfahren nach einem der vorangehenden Ansprüche, dadurch gekennzeichnet, daß der Artikel ein flüssiges oder bevorzugt dickflüssiges oder festes Nahrungsmittel ist.

18. Vorrichtung zum Gefrieren von Artikeln, die ein poröses Fördermittel (1), das durch eine Umfassung (2) isoliert ist, sowie Mittel zur Imprägnierung (3) des Fördermittels (1) mit kryogener Flüssigkeit aufweist, wobei die Porenabmessungen des Fördermittels derart sind, daß kryogene Flüssigkeit in diesem zurückgehalten werden kann, und die Mittel es gestatten, die zu gefrierenden Artikel auf dem mit kryogener Flüssigkeit imprägnierten porösen Träger so anzuordnen, daß ein vollständiges oder teilweises Gefrieren des Artikels durch Wärmeübertragung zwischen dem Artikel und der in dem porösen Träger zurückgehaltenen kryogenen Flüssigkeit gewährleistet ist.

19. Vorrichtung nach Anspruch 18, dadurch gekennzeichnet, daß die Poren einen Durchmesser im Bereich zwischen 0,001 und 5mm und bevorzugt zwischen 0,01 und 2 mm aufweisen.

20. Vorrichtung nach Anspruch 18 und 19, dadurch gekennzeichnet, daß das Fördermittel aus einem porösen Material gebildet wird, welches ein gewebter oder nichtgewebter textiler Stoff aus einem synthetischen oder natürlichen Polymer und bevorzugt aus Polyester ist.

21. Vorrichtung nach einem der Ansprüche 18 bis 20, dadurch gekennzeichnet, daß das Fördermittel (1) auf der ganzen oder einem Teil der Länge, auf dem die Artikel angeordnet sind, mittels einer massiven und/oder gitterförmigen Stützplatte (4) abgestützt wird.

22. Vorrichtung nach einem der Ansprüche 18 bis 21, dadurch gekennzeichnet, daß die Vorrichtung außerdem Mittel zur Rückgewinnung und Rückführung der überschüssigen kryogenen Flüssigkeit aufweist, die im wesentlichen aus einem Trog (5) und einer Pumpe (7), die mit den Mitteln zur Imprägnierung (3) verbundene ist, bestehen.

23. Vorrichtung nach Anspruch 21, dadurch gekennzeichnet, daß die Stützplatte (4) ebenfalls einen Trog bildet.

24. Verwendung eines aus einem gewebten oder nichtgewebten textilen Stoff aus einem synthetischen oder natürlichen Polymer gebildeten porösen Trägers, der mit einer kryogenen Flüssigkeit imprägniert ist, zum Gefrieren eines Artikels.

25. Verwendung nach Anspruch 24, dadurch gekennzeichnet, daß das synthetische Polymer ein Polyester ist.

26. Verwendung nach Anspruch 24 oder 25, dadurch gekennzeichnet, daß der textile Stoff aus einem synthetischen Polymer aus Monofilamenten gebildet wird.

27. Verwendung nach Anspruch 24 oder 25, dadurch gekennzeichnet, daß der poröse Träger Poren aufweist, deren Durchmesser im Bereich zwischen 0,001 und 5mm und bevorzugt zwischen 0,01 und 2mm liegt.

28. Verwendung nach einem der Ansprüche 24 bis 27, dadurch gekennzeichnet, daß die kryogene Flüssigkeit flüssiger Stickstoff ist.

## Claims

1. Process for completely or partially freezing an article, comprising the implementation of the following measures:
a) a porous support is impregnated with a cryogenic liquid, the size of the pores of which is such that the cryogenic liquid is retained therein;
b) the article is then brought into contact with the surface of the thus-impregnated porous support so as to ensure that the article is partially or completely frozen by heat transfer between the said article and the said cryogenic liquid retained in the said porous support; and
c) the article thus completely or partially frozen is recovered.

2. Process according to Claim 1, characterized in that the porous support retains the cryogenic liquid by surface tension or capillary effect.

3. Process according to Claim 1 or 2, characterized in that the porous support is impregnated to saturation.

4. Process according to Claim 1 or 2, characterized in that the porous support is partially impregnated.

5. Process according to Claim 4, characterized in that the porous support contains only 50 to 80% by weight of the quantity of cryogenic liquid that it can absorb in order to be saturated therewith.

6. Process according to one of Claims 1 to 5, characterized in that the porous support is movable.

7. Process according to Claim 6, characterized in that the porous support is a conveyor.

8. Process according to one of the preceding claims, characterized in that the porous support is a fine-celled mesh made of a metallic material or of a composite.

9. Process according to one of Claims 1 to 7, characterized in that the porous support consists of a woven or non-woven fabric made of synthetic or natural polymer.

10. Process according to Claim 9, characterized in that the said synthetic polymer is a polyester.

11. Process according to either of Claims 9 and 10, characterized in that the fabric made of synthetic polymer consists of monofilaments.

12. Process according to one of the preceding claims, characterized in that the pores of the porous support have a diameter of between 0.001 and 5 mm, preferably between 0.01 and 2 mm.

13. Process according to one of the preceding claims, characterized in that the cryogenic liquid is liquid nitrogen.

14. Process according to one of the preceding claims, characterized in that the support is impregnated with cryogenic liquid by spraying or trickling cryogenic liquid, by pushing a flow of cryogenic liquid by means of a pump, or by passage through a bath of cryogenic liquid.

15. Process according to one of the preceding claims, characterized in that the article is crusted on its face in direct contact with the porous support.

16. Process according to Claim 15, characterized in that the article is crusted on at least one other of its faces by spraying or trickling cryogenic liquid.

17. Process according to one of the preceding claims, characterized in that the article is a liquid food, or preferably a pasty or solid food.

18. Apparatus for freezing articles, which includes a porous conveyor (1), insulated by a chamber (2), as well as means (3) for impregnating the said conveyor (1) with cryogenic liquid, the size of the pores of the conveyor being such that cryogenic liquid can be retained therein, and means allowing articles to be frozen to be placed on the porous support impregnated with cryogenic liquid so as to ensure that the article is completely or partially frozen by heat transfer between the said article and the said cryogenic liquid retained in the said porous support.

19. Apparatus according to Claim 18, characterized in that the pores have a diameter of between 0.001 and 5 mm, preferably between 0.01 and 2 mm.

20. Apparatus according to Claim 18 or 19, characterized in that the said conveyor consists of a porous material which is a woven or non-woven fabric made of synthetic or natural polymer, preferably polyester.

21. Apparatus according to one of Claims 18 to 20, characterized in that the conveyor (1) is supported, over all or part of the length over which the articles are placed, by a solid and/or mesh-type support plate (4).

22. Apparatus according to one of Claims 18 to 21, characterized in that the said apparatus furthermore includes means for recovering and recycling the excess cryogenic liquid, essentially consisting of a trough (5) and a pump (7) connected to the impregnation means (8).

23. Apparatus according to Claim 21, characterized in that the support plate (4) also forms a trough.

24. Use of a porous support consisting of a woven or non-woven fabric made of synthetic or natural polymer, impregnated with a cryogenic liquid, for freezing an article.

25. Use according to Claim 24, characterized in that the synthetic polymer is a polyester.

26. Use according to Claim 24 or 25, characterized in that the fabric made of synthetic polymer consists of monofilaments.

27. Use according to Claim 24 or 25, characterized in that the porous support has pores whose diameter is between 0.001 and 5 mm, preferably between 0.01 and 2 mm.

28. Use according to one of Claims 24 to 27, characterized in that the cryogenic liquid is liquid nitrogen.
